(19) Europäisches Patentamt
European Patent Office
Office européen des brevets

(11) **EP 2 894 498 B1**

(12) **EUROPEAN PATENT SPECIFICATION**

(45) Date of publication and mention
of the grant of the patent:
**05.08.2020 Bulletin 2020/32**

(21) Application number: **13835235.6**

(22) Date of filing: **02.09.2013**

(51) Int Cl.:
**G02B 6/02** *(2006.01)*     **G02B 6/036** *(2006.01)*

(86) International application number:
**PCT/JP2013/073547**

(87) International publication number:
**WO 2014/038512 (13.03.2014 Gazette 2014/11)**

(54) **OPTICAL FIBER**

OPTISCHE FASER

FIBRE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.09.2012 JP 2012194260**

(43) Date of publication of application:
**15.07.2015 Bulletin 2015/29**

(73) Proprietor: **Sumitomo Electric Industries, Ltd.
Chuo-ku
Osaka-shi
Osaka 541-0041 (JP)**

(72) Inventors:
• **HIRANO, Masaaki**
  **Yokohama-shi, Kanagawa 244-8588 (JP)**
• **HARUNA, Tetsuya**
  **Yokohama-shi, Kanagawa 244-8588 (JP)**
• **TAMURA, Yoshiaki**
  **Yokohama-shi, Kanagawa 244-8588 (JP)**
• **YAMAMOTO, Yoshinori**
  **Yokohama-shi, Kanagawa 244-8588 (JP)**

(74) Representative: **Hoffmann Eitle
Patent- und Rechtsanwälte PartmbB
Arabellastraße 30
81925 München (DE)**

(56) References cited:
**WO-A1-00/62106      JP-A- S6 340 744
JP-A- S6 340 744      JP-A- 2002 341 170
JP-A- 2002 532 745      JP-A- 2003 337 242
JP-A- 2009 517 702      JP-A- 2012 516 473
US-B2- 7 016 581**

• **MASAO TSUKITANI ET AL.: 'Low-Nonlinearity
Dispersion-Flattened Hybrid Transmission Lines
Consisting of Low-Nonlinearity Pure-Silica-Core
Fibers and Dispersion Compensating Fibers'
IEICE TECHNICAL REPORT, LASERS AND
QUANTAM ELECTRONICS, THE INSTITUTE OF
ELECTRONICS, INFORMATION AND
COMMUNICATION ENGINEERS vol. 99, no. 467,
26 November 1999, pages 67 - 72, XP002941663**

**Description**

Technical Field

The present invention relates to an optical fiber.

Background Art

Regarding a communication system employing digital coherent receiver technology, it is important to improve the optical signal-to-noise ratio (OSNR) of an optical communication system. By improving the OSNR, the performance of an optical communication system can be improved, for example, in the following aspects: the capacity of a transmission system can be increased; the transmission distance of a transmission system can be increased; and the span length between repeaters can be increased. In order to improve OSNR, it is important to reduce the non-linearity of an optical fiber and to reduce the loss in a transmission line. The non-linearity of an optical fiber can be reduced by increasing the effective area Aeff and by increasing the absolute value of chromatic dispersion. WO00/062106 and JP2005-202440A each describe a non-dispersion-shifted optical fiber whose chromatic dispersion is large in absolute value and whose effective area Aeff is large.

In existing transmission lines and transmission apparatuses, the following optical fibers are used: standard single-mode optical fibers (SSMF) that have an effective area Aeff of about 80 $\mu$m$^2$ in a 1.55 $\mu$m wavelength band and that are compliant with ITU-T G.652 recommendation; and dispersion-shifted optical fibers (DSF) and non-zero dispersion-shifted optical fibers (NZ-DSF) that have an effective area Aeff in the range of 50 to 80 $\mu$m$^2$ and that are respectively compliant with ITU-T G.653 and G.655 recommendations. JP2011-197667A describes that a splice loss may become high when one of these optical fibers is spliced to a non-dispersion-shifted optical fiber having a large effective area Aeff, and, as a result, the OSNR may decrease.

In addition, when a terrestrial long-distance communication cable or a submarine repeaterless communication cable, in which optical fibers are densely packed, is made from non-dispersion-shifted optical fibers having a large effective area Aeff, the attenuation of the optical fibers may be increased because of macrobend loss or microbend loss, and, as a result, the OSNR of the transmission system may decrease.

As described in WO00/036443, there is a known technology for compensating for the chromatic dispersion of a negative dispersion fiber by using a positive dispersion optical fiber that has a comparatively small effective area Aeff and a comparatively large chromatic dispersion. The positive dispersion optical fiber, with which a bend-induced loss can be reduced, can be also used as a dispersion compensation module. However, the fiber is not suitable for practical long-haul transmission, because it has an attenuation of 0.17 dB/km or more.

The specification of US2010/0195966 describes a fiber whose attenuation is reduced by doping a core with an alkali metal. However, optical fibers (Examples 8, 13, 14, and 15) described in this specification, which has a small effective area Aeff, is not suitable for practical long-haul transmission, because the attenuation of each of the optical fibers is 0.17 dB/km or more. Thus, an optical fiber that is suitable for high-density packing in an optical cable and that is suitable for long-haul transmission using a digital coherent system has not been examined to date.

US 7 016 581 B2 discloses a dispersion compensation unit capable of compensating for both the chromatic dispersion and dispersion slope of a non-zero dispersion-shifted optical fiber. The dispersion compensation unit is formed by winding a first optical fiber and a second optical fiber into coil shapes and storing them in a case. The first optical fiber has a negative chromatic dispersion $D_1$ and a negative dispersion slope $S_1$ at a wavelength in use. The second optical fiber has a positive chromatic dispersion $D_2$ and a positive dispersion slope $S_2$ at the wavelength in use.

Summary of Invention

Technical Problem

An object of the present invention is to provide an optical fiber that is applicable to high-density implementation and long-haul transmission system.

Solution to Problem

An optical fiber according to the present invention is defined by the combination of features of claim 1. Dependent claims relate to preferred embodiments. The optical fiber includes a core and a cladding. At a wavelength of 1550 nm, an effective area Aeff is 100 $\mu$m$^2$ or less and a chromatic dispersion Disp is 19.0 ps/nm/km or more and 22 ps/nm/km or less, and, a figure of merit FOM represented by an expression

$$\text{FOM} = 5 \log\{|\text{Disp}| \cdot \text{Leff}\} - 10 \log\{\text{Leff}/\text{Aeff}\} - 100\alpha$$

is 3.2 dB or more, where an effective length of the optical fiber is denoted by Leff [km] and an attenuation of the optical fiber is denoted by $\alpha$ [dB/km].

In the optical fiber according to the present invention, the attenuation $\alpha$ at a wavelength of 1550 nm may be 0.164 dB/km or less. The effective area Aeff at a wavelength of 1550 nm may be 76 $\mu$m$^2$ or more, or may be 62 $\mu$m$^2$ or more. A fiber cut-off wavelength measured on a 2 m length of the optical fiber may be 1.30 $\mu$m or more and 1.60 $\mu$m or less. A dispersion slope S at a wavelength of 1550 nm may be 0.05 ps/nm$^2$/km or more and 0.07 ps/nm$^2$/km or less. A splice loss when spliced to a single-mode optical fiber having an effective area of 80 $\mu$m$^2$ may be 0.05 dB/facet or less at a wavelength of 1550 nm.

In the optical fiber according to the present invention, a relative refractive index difference of the core with respect to a refractive index of pure silica glass may be -0.1% or more and 0.1% or less. The core may be made of a silica-based glass that is doped with chlorine with an average concentration of 1000 atomic ppm or more. The core may be doped with an alkali metal with an average concentration of 0.01 atomic ppm or more and 50 atomic ppm or less. A concentration of a main-group metal and a transition metal in the core may be 1 ppm or less.

The core includes a first core and a second core, the first core having a minimum refractive index $N_i$, a maximum refractive index $N_{i2}$, and an outer radius $r_i$, the second core having a maximum refractive index $N_c$ and an outer radius $r_c$, where $N_c \geq N_{i2}$, $r_c \geq r_i$, and $2r_c$ is 9.0 $\mu$m or more and 11.0 $\mu$m or less, and a relative refractive index difference $\Delta_c = (N_c - N_{d2})/N_{d2}$ of the maximum refractive index $N_c$ of the second core with respect to the minimum refractive index $N_{d2}$ of the cladding in the distance range of $r_c$ or more and $4.5r_c$ or less from the axis is 0.40% or more and 0.62% or less. A relative refractive index difference $\Delta_i = (N_c - N_i)/N_i$ is 0.05% or more and 0.25% or less.

In the optical fiber according to the present invention, the cladding may include a first cladding and a second cladding, the first cladding having an outer radius $r_d$, a maximum refractive index $N_{d1}$, and a minimum refractive index $N_{d2}$, the second cladding having an outer radius $r_o$, a maximum refractive index $N_o$, and a minimum refractive index $N_{o2}$, where $N_c > N_{o2} > N_{d1}$ and $r_c < r_d < r_o$; a relative refractive index difference $\Delta_d = (N_o - N_{d2})/N_{d2}$ of the maximum refractive index $N_o$ of the second cladding with respect to the minimum refractive index $N_{d2}$ of the first cladding may be 0.05% or more and 0.25% or less; and a ratio Ra = $r_d/r_c$ of the outer radius $r_d$ of the first cladding to the outer radius $r_c$ of the core may be 3.0 or more and 4.5 or less.

In the optical fiber according to the present invention, the core has a minimum refractive index $N_i$ at a distance $r_i$ from the center axis of the optical fiber, the core may have a maximum refractive index $N_c$ at a distance $r_x$ from the axis, and, when an outer diameter of the core is denoted by $r_c$, $r_1 < r_x \leq r_c$, $R_c = r_e/r_x$ may be 1 or more and 5.0 or less, and 9 $\mu$m $\leq 2r_c \leq$ 11 $\mu$m; a relative refractive index difference $\Delta_i = (N_c - N_i)/N_i$ of the maximum refractive index $N_c$ of the core with respect to the minimum refractive index $N_i$ of the core is 0.05% or more and 0.25% or less; and a relative refractive index difference $\Delta_c = (N_c - N_{d2})/N_o$ of the maximum refractive index $N_c$ of the core with respect to the minimum refractive index $N_{d2}$ in a distance range of $r_c$ or more and $4.5r_c$ or less from the axis is 0.40% or more and 0.62% or less.

Advantageous Effects of Invention

With the present invention, an optical fiber that is applicable to high-density implementation and long-haul transmission system can be provided.

Brief Description of Drawings

Figure 1 is a graph representing the relationship between effective area Aeff and microbend-induced loss increase at a wavelength of 1550 nm by using chromatic dispersion Disp as a parameter.
Figure 2 is a graph representing the relationship between splice loss of an optical fiber and effective area Aeff of the optical fiber at a wavelength of 1550 nm when spliced to a dissimilar optical fiber, which is a standard single-mode optical fiber having an effective area of 80 $\mu$m$^2$.
Figure 3 is a graph representing the relationship between attenuation $\alpha$ and effective area Aeff at a wavelength of 1550 nm by using figure of merit FOM as a parameter.
Section (a) and section (b) of Fig. 4 are conceptual diagrams illustrating preferable examples of the refractive index profile of an optical fiber not forming part of the present invention.
Figure 5 is a conceptual diagram illustrating a design example of an optical fiber having a single-peak-core refractive index profile.

Figure 6 is a graph representing contour lines of parameters of an optical fiber, which has a single-peak-core refractive index profile, the graph having relative refractive index difference $\Delta_c$ along the horizontal axis and diameter $2r_c$ along the vertical axis.

Figure 7 is a diagram illustrating a refractive index profile of an optical fiber.

Figure 8 is a conceptual diagram illustrating a design example of an optical fiber having a ring-core refractive index profile.

Figure 9 is a graph representing contour lines of parameters of an optical fiber, which has a ring-core refractive index profile, the graph having a relative refractive index difference $\Delta_c$ along the horizontal axis and a diameter $2r_c$ along the vertical axis.

Figure 10 is a graph representing the relationship between chromatic dispersion and FOM, which is represented by expression (1a), in a case where attenuation $\alpha$ is 0.15 dB/km by using Aeff as a parameter.

Description of Embodiments

Hereinafter, embodiments of the present invention will be described in detail with reference to the drawings. The same elements in the drawings will be denoted by the identical numerals and redundant description of such elements will be omitted.

In the present specification, at a wavelength of 1550 nm, the chromatic dispersion of an optical fiber is denoted by Disp [ps/nm/km], the effective area is denoted by Aeff$[\mu m^2]$, the attenuation is denoted by $\alpha$ [dB/km], the span length is denoted by L [km], and the effective length is denoted by Leff [km]. The figure of merit FOM of the optical fiber is represented by expressions (1a), (1b), and (1c).

$$FOM = 5 \log\{|Disp|\cdot Leff\} - 10 \log\{Leff/Aeff\} - \alpha \times 100 \text{ km} \qquad (1a)$$

$$Leff = (1 - \exp(-\alpha'L))/\alpha' \qquad (1b)$$

$$\alpha' = \alpha/4.343 \qquad (1c)$$

According to A. Carena, et al., ECOC2011, Th.12.LeCervin.5, the figure of merit FOM of an optical fiber is represented by expression (2a). Expression (1a) can be obtained by applying expressions (2b) and (2c) to expression (2a) and assuming that the span length L is 100 km. Here, C denotes the velocity of light in vacuum, and $\lambda$ denotes the wavelength (here, 1550 nm). The value of $n_2$, which denotes the nonlinear refractive index of the optical fiber, is set to $2.18 \times 10^{-20}$ m$^2$/W for a pure silica core optical fiber. Note that the difference between expressions (1a) and (2a) is a constant.

$$FOM = 5 \log\{|\beta2|\cdot Leff\} - 10 \log\{\gamma\cdot Leff\} - \alpha \times L \qquad (2a)$$

$$\beta2 = -2\pi C \times Disp/\lambda^2 \qquad (2b)$$

$$\gamma = (n_2/Aeff) \times (2\pi/\lambda) \qquad (2c)$$

According to R. Cigliutti, et al., JLT V.29, No.15, pp.2310-2318, 2011, for a commercial pure silica core optical fiber, $\alpha$ = 0.168 dB/km, Aeff = 110 $\mu m^2$, and Disp = 20.6 ps/nm/km. Therefore, the figure of merit FOM is 3.2 dB. Accordingly, high-speed transmission can be performed by using an optical fiber having a figure of merit FOM that is equal to or higher than that of this pure silica core optical fiber. Preferably, the figure of merit FOM is higher and more preferably, for example, 3.7 dB or higher.

As can be seen from expression (1a), the figure of merit FOM increases as the absolute value of the chromatic dispersion Disp increases, as the effective area Aeff increases, and as the attenuation $\alpha$ decreases; and a performance in an optical transmission system can be improved. FOM become equal to 3.2 dB when, for example, Aeff = 100 $\mu m^2$, Disp = 21.0 ps/nm/km, and $\alpha$ = 0.163 dB/km. FOM become equal to 3.2 dB when Aeff = 90 $\mu m^2$ Disp = 20.0 ps/nm/km, and $\alpha$ = 0.157 dB/km. FOM become equal to 3.2 dB when Aeff = 80 $\mu m^2$, Disp = 19.5 ps/nm/km, and $\alpha$ = 0.151 dB/km.

However, if the effective area Aeff becomes excessive large, the microbend-induced loss will increase, and a large attenuation may occur when the optical fiber is installed into a cable. Moreover, in general, a splice loss will become higher when spliced to a single-mode optical fiber or a NZ-DSF that has been generally laid. Therefore, it is not preferable that the effective area Aeff be too large.

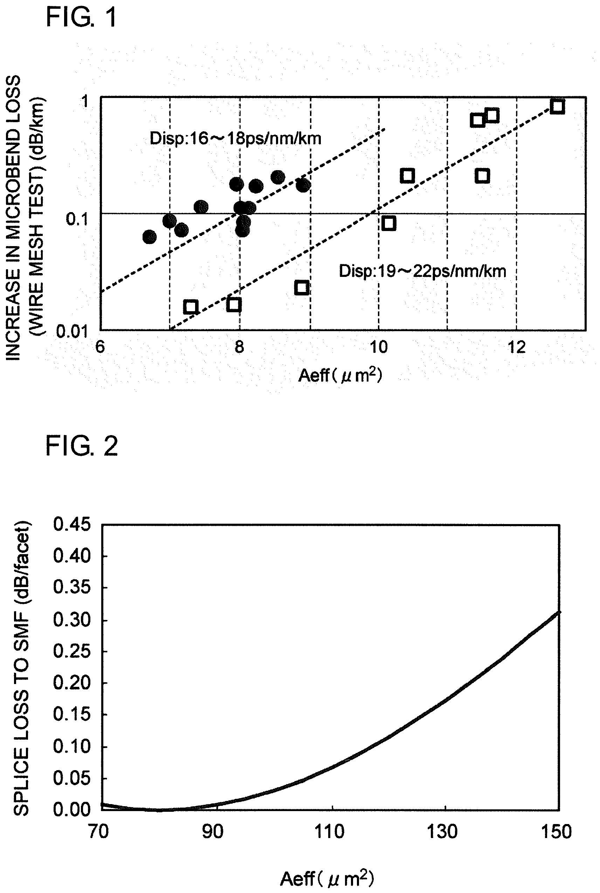

Figure 1 is a graph representing the relationship between effective area Aeff and microbend-induced loss increase at a wavelength of 1550 nm by using chromatic dispersion Disp as a parameter. The horizontal axis represents the effective area Aeff, and the vertical axis represents the microbend-induced loss increase. Two broken lines respectively represent a trend line in a case where the chromatic dispersion Disp is in the range of 19 to 22 ps/nm/km and a trend line in a case where the chromatic dispersion Disp is in the range of 16 to 18 ps/nm/km. The microbend-induced loss is represented by an increase in the loss when the optical fiber is wound, with a tension of 80 g, around a bobbin that has a diameter of 400 mm and that is covered with a mesh of wires each of which has a diameter of 50 $\mu$m and which are arranged with a pitch of 100 $\mu$m.

For the same effective area Aeff, the microbend-induced loss in the case where the chromatic dispersion Disp is in the range of 19 to 22 ps/nm/km, which is large, is smaller than that in the case where the chromatic dispersion Disp is in the range of 16 to 18 ps/nm/km. A single-mode optical fiber that is generally used in a terrestrial cable has a chromatic dispersion Disp of 17 ps/nm/km and an effective area Aeff of about 80 $\mu$m$^2$. It is preferable that the chromatic dispersion Disp be in the range of 19 to 22 ps/nm/km and the effective area Aeff be 100 $\mu$m$^2$ or less in order to have a microbend-induced loss characteristic equivalent to this optical fiber. The attenuation of a pure silica core optical fiber, which has a core made of a substantially pure silica glass, decreases as the chromatic dispersion increases, because the power of transmitted lightwave is concentrated more on the pure silica core as the chromatic dispersion increases.

It is preferable that the macrobend loss of an optical fiber be smaller. For example, when the optical fiber is wound with a diameter of 20 mm, the macrobend loss at a wavelength of 1550 nm is preferably 20 dB/m or less, more preferably 10 dB/m or less, and still more preferably 3 dB/m or less. When the optical fiber is wound with a diameter of 30 mm, the bend-induced loss becomes smaller, and preferably, the bend-induced loss at a wavelength of 1550 nm is 2 dB/m or less, and more preferably 1 dB/m or less. When the optical fiber is wound with a diameter of 60 mm, preferably, the bend-induced loss in a wavelength range lower than 1625 nm is 0.01 dB/m or less.

In general, a cladding glass portion of a transmission optical fiber is coated with two-layered resin coating. In order to suppress microbend-induced loss increase of an optical fiber, it is preferable that a primary resin coating have a low Young's modulus and a secondary resin coating have a high Young's modulus. To be specific, preferably, the primary resin coating has a Young's modulus in the range of 0.2 to 2 MPa, and more preferably in the range of 0.2 to 1 MPa; and the secondary resin coating has a Young's modulus in the range of 500 to 2000 MPa, and more preferably in the range of 1000 to 2000 MPa.

In order to reduce the microbend-induced loss of an optical fiber, a method of increasing the diameter of a cladding glass or the outer diameter of a resin coating may be preferably used. However, enlargement the difference from a generally used optical fiber (the glass diameter: 125 $\mu$m, the cover outer diameter: 245 $\mu$m) is not practical. The outer diameter of the cladding glass may be in the range of 123 to 127 $\mu$m, and the outer diameter of the resin coating may be in the range of 230 to 260 $\mu$m.

Figure 2 is a graph representing the relationship between splice loss of an optical fiber and effective area Aeff of the optical fiber at a wavelength of 1550 nm when spliced to a dissimilar optical fiber, which is a standard single-mode optical fiber having an effective area of 80 $\mu$m$^2$. As the effective area Aeff increases, the dissimilar splice loss when spliced to an optical fiber of a different type increases, and, as a result, the performance of the system decreases. It is preferable that the effective area Aeff be about 100 $\mu$m$^2$ or less, because, in this case, the splice loss when spliced to a standard single-mode optical fiber, having an effective area of 80 $\mu$m$^2$, is about 0.05 dB/facet or less.

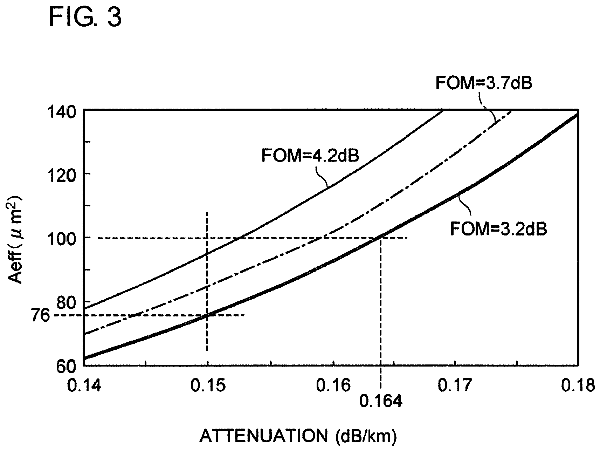

Figure 3 is a graph representing the relationship between attenuation $\alpha$ and effective area Aeff at a wavelength of 1550 nm by using the figure of merit FOM as a parameter. The horizontal axis represents the attenuation $\alpha$, and the vertical axis represents the effective area Aeff. The curves respectively represent contour lines for the cases where the figure of merit FOM has values of 3.2, 3.7, and 4.2 dB. Here, it is assumed that the chromatic dispersion Disp is 21 ps/nm/km.

When the effective area Aeff is 100 $\mu$m$^2$, it is preferable that the attenuation $\alpha$ be 0.164 dB/km or less so that the figure of merit FOM can be 3.2 dB or more, it is preferable that the attenuation $\alpha$ be 0.159 dB/km or less so that the figure of merit FOM can be 3.7 dB or more, and it is preferable that the attenuation $\alpha$ be 0.152 dB/km or less so that the figure of merit FOM can be 4.2 dB or more. At present, an attenuation $\alpha$ of 0.15 dB/km is realized. In this case, if the effective area Aeff is 76 $\mu$m$^2$ or more, the figure of merit FOM is 3.2 dB or more. Accordingly, it is preferable that the effective area Aeff be 76 $\mu$m$^2$ or more. However, it is expected that the attenuation $\alpha$ will decrease as the technology will develop in the future. For example, assuming that the attenuation $\alpha$ will be reduced to about 0.14 dB/km, it is preferable that the effective area Aeff be 62 $\mu$m$^2$ or more.

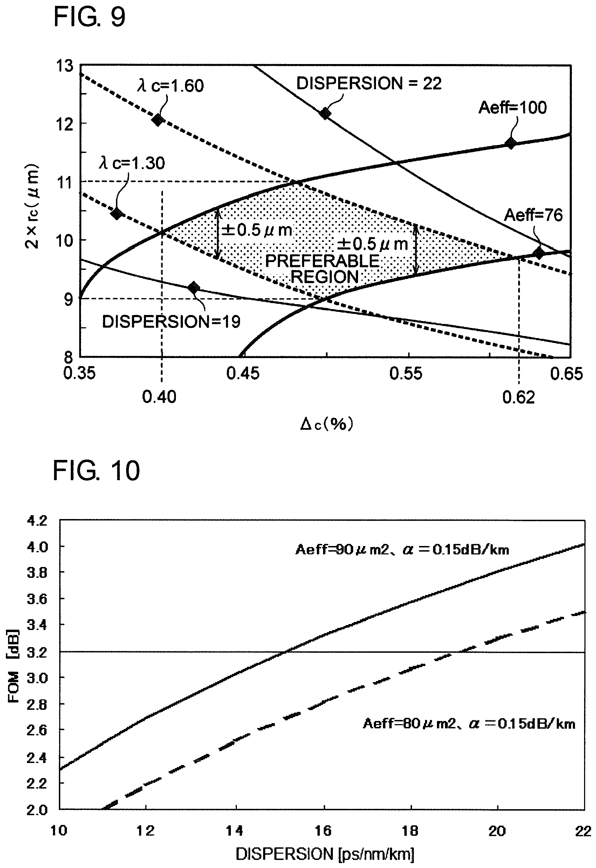

Figure 10 is a graph representing the relationship between chromatic dispersion and FOM, which is represented by expression (1a), in a case where attenuation $\alpha$ is 0.15 dB/km by using Aeff as a parameter. The solid line represents the relationship in a case where Aeff is 90 $\mu$m$^2$, and the broken line represents the relationship a case where Aeff is 80 $\mu$m$^2$. It is preferable that the chromatic dispersion be large, because the FOM increases as the chromatic dispersion comes to be higher. It is preferable that the chromatic dispersion be 15 ps/nm/km or more when Aeff = 90 $\mu$m$^2$ and the chromatic dispersion be 19 ps/nm/km or more when Aeff = 80 $\mu$m$^2$ because, in these cases, the FOM becomes 3.2 dB.

In order to realize a low-loss optical fiber having an attenuation $\alpha$ of 0.164 dB/km or less, the optical fiber has a core made of a substantially pure silica glass and that the relative refractive index difference ($N_c$ - $N_{SiO2}$)/$N_{SiO2}$ of the maximum refractive index $N_c$ of the core with respect to the refractive index $N_{SiO2}$ of the pure silica glass be -0.1% or more and 0.1% or less. The core may be doped with chlorine with an average concentration of 1000 atomic ppm or more or may be doped with fluorine with an average concentration of 100 atomic ppm or more. The core may be doped with an alkali metal with an average concentration of 0.01 atomic ppm or more and 50 atomic ppm or less. The alkali metal may be potassium, sodium, rubidium, or the like. In such a case, the viscosity of the core can be reduced, and therefore the attenuation can be reduced to 0.16 dB/km or less. It is preferable that the concentration of main-group metals (Ge, Al, and the like) and transition metals (Ni, Fe, Mn, and the like) in the core be 1 ppm or less, because, in this case, the scattering loss and the absorption loss due to the transition metals and the main-group metals can be suppressed.

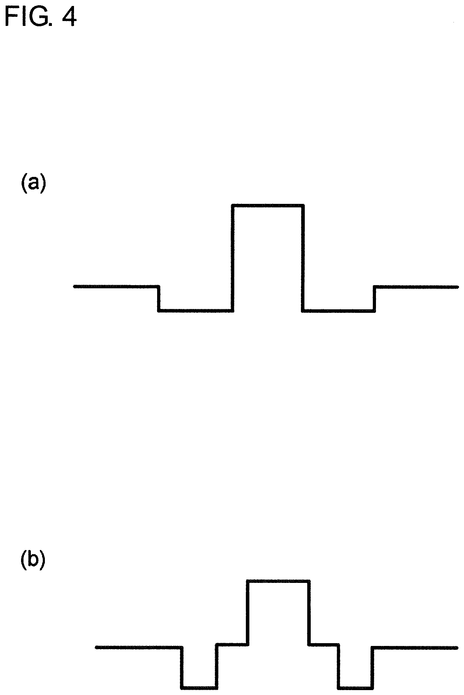

Section (a) and section (b) of Fig. 4 are conceptual diagrams illustrating preferable examples of the refractive index profile of an optical fiber not forming part of the present invention. An optical fiber having a large effective area Aeff will have a problem of a large bend-induced loss. However, the bend-induced loss can be reduced by forming around the core a low refractive index region, which has a refractive index lower than the outside of the low refractive index region. The refractive index profiles illustrated in section (a) and section (b) are both preferable for an optical fiber for long-haul transmission. The profile illustrated in section (a), which is known as a W cladding type profile, is more preferable, because it is suitable for mass-production.

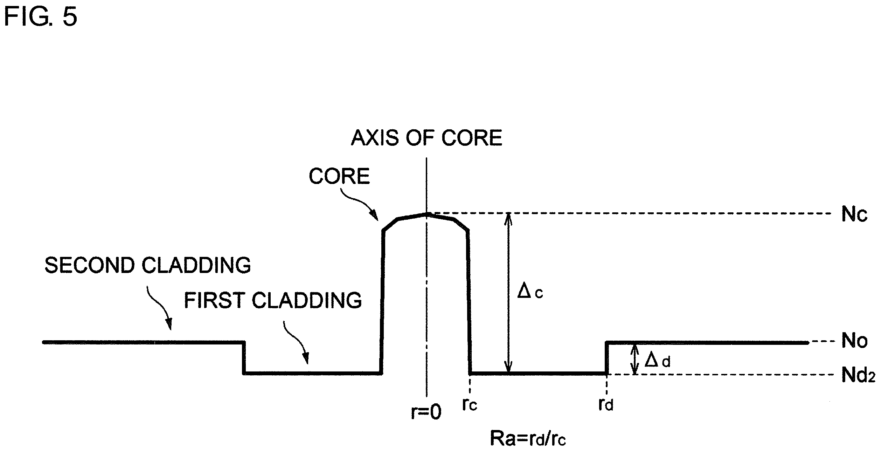

Figure 5 is a conceptual diagram illustrating a design example of an optical fiber having a single-peak-core refractive index profile. The optical fiber includes a core that has a single-peak refractive index profile, a first cladding that surrounds the core, and a second cladding that surrounds the first cladding. Let $r_c$ denote the outer radius of the core and $N_c$ denote the maximum refractive index of the core. Let $r_d$ denote the outer radius of the first cladding, $N_{d1}$ denote the maximum refractive index of the first cladding, and $N_{d2}$ denote the minimum refractive index of the first cladding. Let $r_o$ denote the outer radius of the second cladding, $N_o$ denote the maximum refractive index of the second cladding, and $N_{o2}$ denote the minimum refractive index of the second cladding. These parameters satisfy the relationships $N_c > N_{o2} > N_{d1}$ and $r_c < r_d < r_o$. Let $\Delta_c = (N_c - N_{d2})/N_{d2}$ denote the relative refractive index difference of the maximum refractive index $N_c$ of the core with respect to the minimum refractive index $N_{d2}$ of the first cladding, and let $\Delta_d = (N_o - N_{d2})/N_{d2}$ denote the relative refractive index difference of the maximum refractive index $N_o$ of the second cladding with respect to the minimum refractive index $N_{d2}$ of the first cladding. Let Ra = $r_d/r_c$ denote the ratio of the outer radius of the first cladding $r_d$ to the outer radius of the core $r_c$.

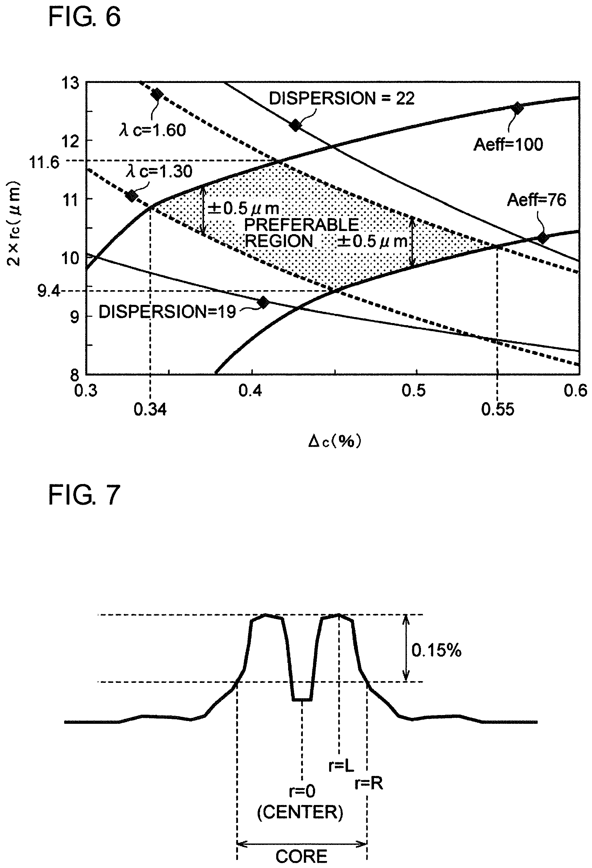

Figure 6 is a graph representing contour lines of parameters of an optical fiber, which has a single-peak-core refractive index profile, the graph having relative refractive index difference $\Delta_c$ along the horizontal axis and diameter $2r_c$ along the vertical axis. The curves in Fig. 6 represent the following, where $\Delta_d$ = 0.15% and Ra = 3.8: a contour line along which the fiber cut-off wavelength $\lambda_c$ on a 2 m length of an optical fiber is 1.60 $\mu$m (corresponding to a cable cut-off wavelength of 1.52 $\mu$m on a 22 m length of the optical fiber); a contour line along which the fiber cut-off wavelength $\lambda_c$ on a 2 m length of an optical fiber is 1.30 $\mu$m (corresponding to a cable cut-off wavelength of 1.22 $\mu$m on a 22 m length of the optical fiber); a contour line along which the effective area Aeff at a wavelength of 1550 nm is 100 $\mu$m$^2$; a contour line along which the effective area Aeff at a wavelength of 1550 nm is 76 $\mu$m$^2$; a contour line along which the chromatic dispersion Disp at a wavelength of 1550 nm is 19 ps/nm/km; and a contour line along which the chromatic dispersion Disp at a wavelength of 1550 nm is 22 ps/nm/km.

It is preferable that the relative refractive index difference $\Delta_c$ and the diameter $2r_c$ be in a region (hatched region) in which the fiber cut-off wavelength $\lambda_c$ on a 2 m length of an optical fiber is 1.30 $\mu$m or more and 1.60 $\mu$m or less, the effective area Aeff is 76 $\mu$m$^2$ or more and 100 $\mu$m$^2$ or less, and the chromatic dispersion Disp is 19 ps/nm/km or more and 22 ps/nm/km or less. For a single-peak-core optical fiber, it is preferable that $\Delta_c$ be 0.34% or more and 0.55% or less and the core diameter be in the range of 9.4 to 11.6 $\mu$m. It is more preferable that $\Delta_c$ be in the range of 0.38 to 0.49% so that a range of the core diameter in which the transmission characteristic is preferable can be broad as $\pm0.5$ $\mu$m or more.

It is preferable that the ratio Ra = $r_d/r_c$ of the outer radius of the first cladding $r_d$ to the outer radius of the core $r_c$ be 3.0 or more and 4.5 or less. It is preferable that the relative refractive index difference $\Delta_d$ of the maximum refractive index $N_o$ of the second cladding with respect to the minimum refractive index $N_{d2}$ of the first cladding be in the range of 0.08 to 0.20%. In this case, the bending characteristics can be improved.

The radius $r_d$ of the core is defined as follows. Referring to Fig. 7, let N(r) denote the refractive index at a distance r in the radial direction from the axis of the optical fiber. It is assumed that the refractive index N(L) at a distance L in the radial direction is the maximum value $N_{max}$. It is assumed that ($N_{max}$ - N(R))/$N_{max}$ is 0.15%, where R denotes a distance in the radial direction such that L < R. The radius $r_d$ of the core is defined as the radius R.

The outer radius $r_d$ of the first cladding is defined as follows. Let $r_d$, be a radius at which the refractive index of the first cladding has the minimum value $N_{d1}$. Let $r_{o1}$ be a radius at which the refractive index of the second cladding has the maximum value $N_o$. The outer radius $r_d$ is defined as a radius in the range $r_{d1} < r_d < r_{o1}$, where $r_{d1}$ and $r_{o1}$ are radial positions, such that the derivative dN/dr of the refractive index N(r) with respect to the radius has the maximum value. In other words, $r_d$ is defined as a radial position that is located between a radius where the refractive index of the cladding has the minimum value and a radius where the refractive index of the cladding has the maximum value, at which the refractive index increases with increasing radius, and at which the rate of change in the refractive index is the maximum.

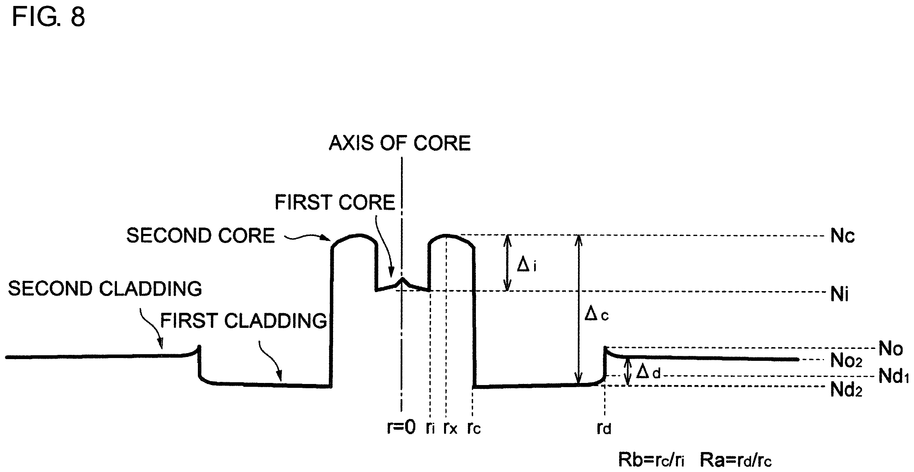

Figure 8 is a conceptual diagram illustrating a design example of an optical fiber having a ring-core refractive index profile. An optical fiber having a ring-core refractive index profile includes a core that includes a first core and a second core and that has a ring-shaped refractive index profile, a first cladding that surrounds the core, and a second cladding that surrounds the first cladding. Let $r_i$ denote the outer radius of the first core and $N_i$ denote the minimum refractive index of the first core. Let $r_c$ denote the outer radius of the second core and $N_c$ denote the maximum refractive index of the second core. Let $r_d$ denote the outer radius of the first cladding, $N_{d1}$ denote the maximum refractive index of the first cladding, and $N_{d2}$ denote the minimum refractive index of the first cladding. Let $r_o$ denote the outer radius of the second cladding, $N_o$ denote the maximum refractive index of the second cladding, and $N_{o2}$ denote the minimum refractive index of the second cladding. These parameters satisfy the relationships $N_c > N_{o2} > N_{d1}$ and $r_i < r_c < r_d < r_o$.

Let $\Delta_c = (N_c - N_{d2})/N_{d2}$ denote the relative refractive index difference of the maximum refractive index $N_c$ of the second core with respect to the minimum refractive index $N_{d2}$ of the first cladding, and let $\Delta_d = (N_o - N_{d2})/N_{d2}$ denote the relative refractive index difference of the maximum refractive index $N_o$ of the second cladding with respect to the minimum refractive index $N_{d2}$ of the first cladding. Let $\Delta_i = (N_c - N_i)/N_i$ denote the relative refractive index difference of the maximum refractive index $N_c$ of the second core with respect to the minimum refractive index $N_i$ of the first core. Let Ra = $r_d/r_c$ denote the ratio of the outer radius of the first cladding $r_d$ to the outer radius of the second core $r_c$, and let Rb = $r_c/r_i$ denote the ratio of the outer radius of the second core $r_c$ to the outer radius of the first core $r_i$.

Figure 9 is a graph representing contour lines of parameters an optical fiber, which has a ring-core refractive index profile, the graph having relative refractive index difference $\Delta_c$ along the horizontal axis and diameter $2r_c$ along the vertical axis. The curves in Fig. 9 represent the following, where $\Delta_d = 0.14\%$, $\Delta_i = 0.16\%$, Ra = 4.1, and Rb = 2.6: a contour line along which the fiber cut-off wavelength $\lambda_c$ on a 2 m length of optical fiber is 1.60 $\mu$m (corresponding to a cable cut-off wavelength of 1.52 $\mu$m on a 22 m length of optical fiber); a contour line along which the fiber cut-off wavelength $\lambda_c$ on a 2 m length of optical fiber is 1.30 $\mu$m (corresponding to a cable cut-off wavelength of 1.22 $\mu$m on a 22 m length of optical fiber); a contour line along which the effective area Aeff at a wavelength of 1550 nm is 100 $\mu$m$^2$; a contour line along which the effective area Aeff at a wavelength of 1550 nm is 76 $\mu$m$^2$; a contour line along which the chromatic dispersion Disp at a wavelength of 1550 nm is 19 ps/nm/km; and a contour line along which the chromatic dispersion Disp at a wavelength of 1550 nm is 22 ps/nm/km.

It is preferable that the relative refractive index difference $\Delta_c$ and the diameter $2r_c$ be in a region (hatched region) in which the fiber cut-off wavelength $\lambda_c$ on a 2 m length of optical fiber is 1.30 $\mu$m or more and 1.60 $\mu$m or less, the effective area Aeff is 76 $\mu$m$^2$ or more and 100 $\mu$m$^2$ or less, and the chromatic dispersion Disp is 19 ps/nm/km or more and 22 ps/nm/km or less. For a ring-core optical fiber, $\Delta_c$ is 0.40% or more and 0.62% or less and the core diameter be 9.0 $\mu$m or more and 11.0 $\mu$m or less. It is more preferable that $\Delta_c$ be in the range of 0.44 to 0.55% so that a range of the core diameter in which the transmission characteristic is preferable can be broad as $\pm$0.5 $\mu$m or more.

It is preferable that the ratio Ra = $r_d/r_c$ of the outer radius of the first cladding $r_d$ to the outer radius of the core $r_c$ be 3.0 or more and 4.5 or less. It is preferable that the ratio Rb = $r_c/r_i$ of the outer radius $r_c$ of the second core to the outer radius $r_i$ of the first core be in the range of 1.1 to 5. The relative refractive index difference $\Delta_d$ of the maximum refractive index $N_o$ of the second cladding with respect to the minimum refractive index $N_{d2}$ of the first cladding is 0.05% or more and 0.25% or less. The relative refractive index difference $\Delta_i$ of the maximum refractive index $N_c$ of the second core with respect to the minimum refractive index $N_i$ of the center core may be 0.05% or more and 0.25% or less. In this case, the bending characteristics can be improved.

The outer radius $r_i$ of the first core is defined as follows. Let $r_{i1}$ be a radius at which the refractive index of the core has the minimum value $N_i$. Let $r_x$ be a radius at which the refractive index of the core has the maximum value $N_c$. The outer radius $r_d$ is defined as a radius in the range $r_{i1} < r_i < r_x$, where $r_{i1}$ and $r_x$ are radial positions, such that the derivative dN(r)/dr of the refractive index N(r) with respect to the radius has the maximum value. In other words, $r_i$ is defined as a radial position that is located between a radius where the refractive index of the core has the minimum value and a radium where the refractive index of the core has the maximum value, at which the refractive index increases with increasing radius, and at which the rate of change in the refractive index is the maximum.

Preferably, the optical fiber has other characteristics described below. It is preferable that the attenuation at the wavelength 1380 nm be as low as 0.8 dB/km or less, more preferably 0.4 dB/km or less, and still more preferably 0.3 dB/km or less. The polarization mode dispersion may be 0.2 ps/$\sqrt{}$km or less. It is preferable that the cable cut-off wavelength be 1520 nm or less. It is more preferable that the cable cut-off wavelength be 1450 nm or less, which is a pump wavelength used for Raman amplification. The mode field diameter at a wavelength of 1550 nm may be in the range of 8.5 to 11.5 $\mu$m. The dispersion slope at a wavelength of 1550 nm may be 0.050 ps/nm$^2$/km or more and 0.070 ps/nm$^2$/km or less. The core and the cladding of an optical-fiber preform may each have a refractive index structure.

It is possible to improve the transmission performance in long-haul and high-capacity transmission by using a transmission system including the optical fiber described above, which has a large effective area Aeff, a large chromatic dispersion Disp, and a large figure of merit FOM. In particular, the attenuation can be reduced and the transmission performance can be improved when the optical fiber is used in optical cables in which optical fibers are packed with a comparative high density, such as terrestrial high-count cables and submarine repeaterless transmission cables.

**Claims**

1. An optical fiber comprising a core, made of substantially pure silica glass, and a cladding,
   wherein, at a wavelength of 1550 nm, an effective area Aeff [$\mu$m$^2$] is 100 $\mu$m$^2$ or less and a chromatic dispersion Disp [ps/nm/km] is 19.0 ps/nm/km or more and 22 ps/nm/km or less, and, a figure of merit FOM [dB] represented by an expression

$$FOM = 5 \cdot \log\{|Disp| \cdot Leff\} - 10 \cdot \log\{Leff/Aeff\} - 100\alpha$$

   is 3.2 dB or more, where an effective length of the optical fiber is denoted by Leff [km] = (1-exp(-100$\alpha$/4.343)) / ($\alpha$/4.343), and an attenuation of the optical fiber is denoted by $\alpha$ [dB/km],

   wherein $\alpha$ is 0.15 dB/km or more,
   wherein a relative refractive index difference of the core with respect to a refractive index of pure silica glass is -0.1% or more and 0.1% or less,
   wherein the core includes a first core and a second core, the first core having a minimum refractive index $N_i$, a maximum refractive index $N_{i2}$, and an outer radius $r_i$, the second core having a maximum refractive index $N_c$ at a distance $r_x$ from a center axis of the optical fiber and an outer radius $r_c$, where $N_c \geq N_{i2}$, and $r_c \geq r_x \geq r_i$,
   wherein a diameter $2r_c$ of the core is 9.0 $\mu$m or more and 11.0 $\mu$m or less,
   a relative refractive index difference $\Delta_c = (N_c - N_{d2})/N_{d2}$ of the maximum refractive index $N_c$ of the second core with respect to a minimum refractive index $N_{d2}$ of the cladding in a distance range of $r_c$ or more and 4.5$r_c$ or less from the center axis of the optical fiber is 0.40% or more and 0.62% or less, and
   a relative refractive index difference $\Delta_i = (N_c - N_i)/N_i$ is 0.05% or more and 0.25% or less.

2. The optical fiber according to Claim 1,
   wherein the attenuation $\alpha$ at a wavelength of 1550 nm is 0.164 dB/km or less.

3. The optical fiber according to Claim 1 or 2,
   wherein the effective area Aeff at a wavelength of 1550 nm is 76 $\mu$m$^2$ or more.

4. The optical fiber according to Claim 1 or 2,
   wherein the effective area Aeff at a wavelength of 1550 nm is 62 $\mu$m$^2$ or more.

5. The optical fiber according to any one of Claims 1 to 4,
   wherein a fiber cut-off wavelength measured on a 2 m length of the optical fiber is 1.30 $\mu$m or more and 1.60 $\mu$m or less.

6. The optical fiber according to any one of Claims 1 to 5,
   wherein a dispersion slope S at a wavelength of 1550 nm is 0.05 ps/nm$^2$/km or more and 0.07 ps/nm$^2$/km or less.

7. The optical fiber according to any one of Claims 1 to 6,
   wherein a splice loss when spliced to a single-mode optical fiber having an effective area of 80 $\mu$m$^2$ at a wavelength of 1550 nm is 0.05 dB/facet or less.

8. The optical fiber according to Claim 1,
   wherein the core is made of a silica-based glass that is doped with chlorine with an average concentration of 1000 atomic ppm or more.

9. The optical fiber according to Claim 1 or 8,
wherein the core is doped with an alkali metal with an average concentration of 0.01 atomic ppm or more and 50 atomic ppm or less.

10. The optical fiber according to any one of Claims 1, 8 or 9,
wherein a concentration of a main-group metal and a transition metal in the core is 1 ppm or less.

11. The optical fiber according to Claim 1,
wherein the cladding includes a first cladding and a second cladding, the first cladding having an outer radius $r_d$, a maximum refractive index $N_{d1}$, and a minimum refractive index $N_{d2}$, the second cladding having an outer radius $r_o$, a maximum refractive index $N_o$, and a minimum refractive index $N_{o2}$, where $N_c > N_{o2} > N_{d1}$ and $r_c < r_d < r_o$,
wherein a relative refractive index difference $\Delta_d = (N_o - N_{d2})/N_{d2}$ of the maximum refractive index $N_o$ of the second cladding with respect to the minimum refractive index $N_{d2}$ of the first cladding is 0.05% or more and 0.25% or less, and
wherein a ratio Ra = $r_d/r_c$ of the outer radius $r_d$ of the first cladding to the outer radius $r_c$ of the core is 3.0 or more and 4.5 or less.

12. The optical fiber according to any one of Claims 1 to 11,
wherein a ratio $R_c = r_c/r_x$ is 1 or more and 5.0 or less.

**Patentansprüche**

1. Lichtwellenleiter, umfassend einen Kern, der aus einem im Wesentlichen reinen Quarzglas besteht, und einen Mantel;
wobei, bei einer Wellenlänge von 1550 nm, eine Wirkfläche Aeff [$\mu m^2$] 100 $\mu m^2$ oder weniger beträgt und eine chromatische Dispersion Disp [ps/nm/km] 19,0 ps/nm/km oder mehr und 22 ps/nm/km oder weniger beträgt und eine Gütezahl FOM [dB], die durch einen Ausdruck

$$FOM = 5 \cdot \log\{|Disp| \cdot Leff\} - 10 \cdot \log\{Leff/Aeff\} - 100\alpha$$

repräsentiert wird, 3,2 dB oder mehr beträgt, wobei eine Wirklänge des Lichtwellenleiters durch Leff [km] = (1-exp(-100$\alpha$/4,343)) / ($\alpha$/4,343) angegeben wird und eine Dämpfung des Lichtwellenleiters durch $\alpha$ [dB/km] angegeben wird,
wobei $\alpha$ 0,15 dB/km oder mehr beträgt,
wobei eine relative Brechzahldifferenz des Kerns bezüglich einer Brechzahl von reinem Quarzglas -0,1 % oder mehr und 0,1 % oder weniger beträgt,
wobei der Kern einen ersten Kern und einen zweiten Kern einschließt, wobei der erste Kern eine minimale Brechzahl $N_i$, eine maximale Brechzahl $N_{i2}$ und einen Außenradius $r_i$ aufweist, wobei der zweite Kern eine maximale Brechzahl $N_c$ bei einem Abstand $r_x$ von einer Mittelachse des Lichtwellenleiters und einen Außenradius $r_c$ aufweist, wobei $N_c \geq N_{i2}$ und $r_c \geq r_x \geq r_i$,
wobei ein Durchmesser $2r_c$ des Kerns 9,0 $\mu m$ oder mehr und 11,0 $\mu m$ oder weniger beträgt,
eine relative Brechzahldifferenz $\Delta_c = (N_c - N_{d2})/N_{d2}$ der maximalen Brechzahl $N_c$ des zweiten Kerns bezüglich einer minimalen Brechzahl $N_{d2}$ des Mantels in einem Abstandsbereich von $r_c$ oder mehr und $4,5r_c$ oder weniger von der Mittelachse des Lichtwellenleiters 0,40 % oder mehr und 0,62 % oder weniger beträgt, und
eine relative Brechzahldifferenz $\Delta_i = (N_c - N_i)/N_i$ 0,05 % oder mehr und 0,25 % oder weniger beträgt.

2. Lichtwellenleiter nach Anspruch 1,
wobei die Dämpfung $\alpha$ bei einer Wellenlänge von 1550 nm 0,164 dB/km oder weniger beträgt.

3. Lichtwellenleiter nach Anspruch 1 oder 2,
wobei die Wirkfläche Aeff bei einer Wellenlänge von 1550 nm 76 $\mu m^2$ oder mehr beträgt.

4. Lichtwellenleiter nach Anspruch 1 oder 2,
wobei die Wirkfläche Aeff bei einer Wellenlänge von 1550 nm 62 $\mu m^2$ oder mehr beträgt.

**5.** Lichtwellenleiter nach einem der Ansprüche 1 bis 4,
wobei eine Fasergrenzwellenlänge, die an einer Länge von 2 m des Lichtwellenleiters gemessen wird, 1,30 $\mu$m oder mehr und 1,60 $\mu$m oder weniger beträgt.

**6.** Lichtwellenleiter nach einem der Ansprüche 1 bis 5,
wobei ein Dispersionsgefälle S bei einer Wellenlänge von 1550 nm 0,05 ps/nm$^2$/km oder mehr und 0,07 ps/nm$^2$/km oder weniger beträgt.

**7.** Lichtwellenleiter nach einem der Ansprüche 1 bis 6,
wobei eine Spleißdämpfung beim Anspleißen an einen Monomodenlichtwellenleiter mit einer Wirkfläche von 80 $\mu$m$^2$ bei einer Wellenlänge von 1550 nm 0,05 dB/Facette oder weniger beträgt.

**8.** Lichtwellenleiter nach Anspruch 1,
wobei der Kern aus einem quarzglasbasierten Glas besteht, das mit Chlor mit einer durchschnittlichen Konzentration von 1000 Atom-ppm oder mehr dotiert ist.

**9.** Lichtwellenleiter nach Anspruch 1 oder 8,
wobei der Kern mit einem Alkalimetall mit einer durchschnittlichen Konzentration von 0,01 Atom-ppm oder mehr und 50 Atom-ppm oder weniger dotiert ist.

**10.** Lichtwellenleiter nach einem der Ansprüche 1, 8 oder 9,
wobei eine Konzentration eines Hauptgruppenmetalls und eines Übergangsmetalls in dem Kern 1 ppm oder weniger beträgt.

**11.** Lichtwellenleiter nach Anspruch 1,
wobei der Mantel einen ersten Mantel und einen zweiten Mantel einschließt, wobei der erste Mantel einen Außenradius $r_d$, eine maximale Brechzahl $N_{d1}$ und eine minimale Brechzahl $N_{d2}$ aufweist, wobei der zweite Mantel einen Außenradius $r_o$, eine maximale Brechzahl $N_o$ und eine minimale Brechzahl $N_{o2}$ aufweist, wobei $N_c > N_{o2} > N_{d1}$ und $r_c < r_d < r_o$,
wobei eine relative Brechzahldifferenz $\Delta_d = (N_o - N_{d2})/N_{d2}$ der maximalen Brechzahl $N_o$ des zweiten Mantels bezüglich der minimalen Brechzahl $N_{d2}$ des ersten Mantels 0,05 % oder mehr und 0,25 % oder weniger beträgt und
wobei ein Verhältnis Ra = $r_d/r_c$ des Außenradius $r_d$ des ersten Mantels zu dem Außenradius $r_c$ des Kerns 3,0 oder mehr und 4,5 oder weniger beträgt.

**12.** Lichtwellenleiter nach einem der Ansprüche 1 bis 11,
wobei ein Verhältnis $R_c = r_c/r_x$ 1 oder mehr und 5,0 oder weniger beträgt.


**Revendications**

**1.** Fibre optique comprenant un cœur, constitué de verre de silice sensiblement pur et une gaine,
dans laquelle, à une longueur d'onde de 1550 nm, une surface efficace Aeff [$\mu$m$^2$] s'élève à 100 $\mu$m$^2$ ou moins et une dispersion chromatique Disp [ps/nm/km] s'élève à 19,0 ps/nm/km ou plus et 22 ps/nm/km ou moins, et un facteur de mérite FOM [dB] représenté par une expression

$$FOM = 5 \cdot \log\{|Disp|\cdot Leff\} - 10 \cdot \log\{Leff/Aeff\} - 100\alpha$$

s'élève à 3,2 dB ou plus, où une longueur efficace de la fibre optique est représentée par Leff [km] = (1- exp(-100$\alpha$/4.343))/($\alpha$/4.343), et une atténuation de la fibre optique est représentée par $\alpha$ [dB/km],
dans laquelle $\alpha$ est 0,15 dB/km ou plus,
dans laquelle une différence d'indice de réfraction relative du cœur par rapport à un indice de réfraction du verre de silice pur représente -0,1% ou plus et 0,1% ou moins,
dans laquelle le cœur comprend un premier cœur et un second cœur, le premier cœur présentant un indice de réfraction minimal $N_i$, un indice de réfraction maximal $N_{i2}$, et un rayon extérieur $r_i$, le second cœur présentant un indice de réfraction maximal $N_c$ à une distance $r_x$ d'un axe central de la fibre optique et un rayon extérieur $r_c$, où $N_c \geq N_{i2}$ et $r_c \geq r_x \geq r_i$,

dans laquelle un diamètre $2r_c$ du cœur s'élève à 9,0 $\mu$m ou plus et 11,0 $\mu$m ou moins,
une différence d'indice de réfraction relative $\Delta_c = (N_c - N_{d2})/N_{d2}$ de l'indice de réfraction maximal $N_c$ du second cœur par rapport à un indice de réfraction minimal $N_{d2}$ de la gaine dans une plage de distance de $r_c$ ou plus et 4,5$r_c$ ou moins depuis l'axe central de la fibre optique représente 0,40 % ou plus et 0,62 % ou moins, et une différence d'indice de réfraction relative $\Delta_i = (N_c - N_i)/N_i$ représente 0,05 % ou plus et 0,25 % ou moins.

2. Fibre optique selon la revendication 1,
dans laquelle l'atténuation a, à une longueur d'onde de 1550 nm, s'élève à 0,164 dB/km ou moins.

3. Fibre optique selon la revendication 1 ou 2,
dans laquelle la surface efficace Aeff, à une longueur d'onde de 1550 nm, s'élève à 76 $\mu$m$^2$ ou plus.

4. Fibre optique selon la revendication 1 ou 2,
dans laquelle la surface efficace Aeff à une longueur d'onde de 1550 nm est de 62 $\mu$m$^2$ ou plus.

5. Fibre optique selon l'une quelconque des revendications 1 à 4,
dans laquelle une longueur d'onde de coupure de fibre mesurée sur une longueur de 2 m de la fibre optique s'élève à 1,30 $\mu$m ou plus et à 1,60 $\mu$m ou moins.

6. Fibre optique selon l'une quelconque des revendications 1 à 5,
dans laquelle une pente de dispersion S, à une longueur d'onde de 1550 nm, s'élève à 0,05 ps/nm$^2$/km ou plus et à 0,07 ps/nm$^2$/km ou moins.

7. Fibre optique selon l'une quelconque des revendications 1 à 6,
dans laquelle une perte d'épissure lors d'une épissure à une fibre optique monomode présentant une surface efficace de 80 $\mu$m$^2$, à une longueur d'onde de 1550 nm, s'élève à 0,05 dB/facette ou moins.

8. Fibre optique selon la revendication 1,
dans laquelle le cœur est constitué d'un verre à base de silice qui est dopé avec du chlore à une concentration moyenne de 1000 ppm atomique ou plus.

9. Fibre optique selon la revendication 1 ou 8,
dans laquelle le cœur est dopé avec un métal alcalin à une concentration moyenne de 0,01 ppm atomique ou plus et 50 ppm atomique ou moins.

10. Fibre optique selon l'une quelconque des revendications 1, 8 ou 9,
dans laquelle une concentration d'un métal du groupe principal et d'un métal de transition dans le cœur s'élève à 1 ppm ou moins.

11. Fibre optique selon la revendication 1,
dans laquelle la gaine inclut une première gaine et une seconde gaine, la première gaine présentant un rayon extérieur $r_d$, un indice de réfraction maximal $N_{d1}$, et un indice de réfraction minimal $N_{d2}$, la seconde gaine présentant un rayon extérieur $r_o$, un indice de réfraction maximal $N_o$, et un indice de réfraction minimal $N_{o2}$, où $N_c > N_{o2} > N_{d1}$ et $r_c < r_d < r_o$,
dans laquelle une différence d'indice de réfraction relative $\Delta_d = (N_o - N_{d2})/N_{d2}$ de l'indice de réfraction maximal $N_o$ de la seconde gaine par rapport à l'indice de réfraction minimal $N_{d2}$ de la première gaine représente 0,05 % ou plus et 0,25 % ou moins, et
dans laquelle un rapport Ra = $r_d/r_c$ du rayon extérieur $r_d$ de la première gaine par rapport au rayon extérieur $r_c$ du cœur est de 3,0 ou plus et de 4,5 ou moins.

12. Fibre optique selon l'une quelconque des revendications 1 à 11,
dans laquelle un rapport $R_c = r_c/r_x$ est de 1 ou plus et de 5,0 ou moins.

FIG. 1

FIG. 2

FIG. 3

FIG. 4

(a)

(b)

EP 2 894 498 B1

## FIG. 5

AXIS OF CORE

CORE

SECOND CLADDING

FIRST CLADDING

$\Delta_c$

$N_c$

$N_o$

$\Delta_d$

$N_{d2}$

r=0   r_c

r_d

$R_a = r_d / r_c$

## FIG. 6

## FIG. 7

EP 2 894 498 B1

## FIG. 8

AXIS OF CORE

FIRST CORE

SECOND CORE

SECOND CLADDING

FIRST CLADDING

$\Delta_i$

$\Delta_c$

$\Delta_d$

Nc

Ni

No

No2

Nd1

Nd2

r=0  ri  rx  rc

rd

Rb=rc/ri   Ra=rd/rc

## FIG. 9

## FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 00062106 A
- JP 2005202440 A
- JP 2011197667 A
- WO 00036443 A
- US 20100195966 A
- US 7016581 B2

**Non-patent literature cited in the description**

- **A. CARENA et al.** *ECOC,* 2011
- **R. CIGLIUTTI et al.** *JLT V,* 2011, vol. 29 (15), 2310-2318